# EUROPEAN PATENT APPLICATION

(11) **EP 0 574 072 A1**
(43) Date of publication of application: **15.12.1993**
(21) Application number: 93201570.4
(22) Date of filing: 02.06.1993
(51) Int. Cl.: A47J 47/14, B65D 81/34

(54) **Heating box for the transportation of pizzas and quiches**

(30) Priority: 03.06.1992 BE 9200505
(71) Applicant: Bakolas, Dimitrios, B-7330 Saint-Ghislain (BE)
(72) Inventor: Bakolas, Dimitrios, B-7330 Saint-Ghislain (BE)
(74) Representative: Leherte, Georges, Dr.

(57) **Abstract**

A heating box for the transportation of pizzas of quiches, comprising a box (1, 2) formed of a thermal insulating material, and a flat electric heating resistance (4) provided with connector means (5), whereas said box comprises a bottom part (1) and a lid (2), adjacent to which a layer (7) formed of a cellulose fibre material is fixed by means of a spiraled thread (8). The resistance (4) is adhered onto the bottom side of a semi-hard aluminium disc (3) which is placed in the bottom part (1).

Due to the high absorptive power of the cellulose fibre material (7), condensed moisture is absorbed in a very efficient way, thereby preventing the crust of a pizza or quiche, from becoming soggy.

## Description

This invention relates to a heating box, capable of maintaining at least one hot pizza or quiche at an elevated high temperature during its transportation, so that it is still at an acceptable temperature, when consumed.

It particularly relates to a heating box, sized to contain a pizza or quiche, and having a lid or similar part, which can be opened to permit a pizza or quiche to be put into the box or to be removed form it, and which can be closed during transportation, said heating box being formed of a thermal insulating material, and further comprising means for absorbing condensed moisture in said box, and optionally comprising an electric heating resistance which is placed in the box.

Freshly baked pizzas or quiches can be ordered at a store or a restaurant, and can be delivered to a home or any other remote location, for consumption. This transportation can be effected by an employee of the store or the restaurant, or by the consumer himself.

A problem in the transportation of hot pizzas or quiches lies in the maintaining of this food at an elevated high temperature during this transportation, so that it can be consumed at a desired temperature. When a pizza or quiche is packaged in a paperboard container, as is often the case, it has usually cooled down to a temparature which is far below the desired temperature, at the moment of consumption.

In order to eliminate this problem, transport containers for pizzas or quiches, have been made of a thermal insulating material. However, a drawback of these containers is that, when it takes a relatively long time before the food is consumed, the container is not capable of maintaining the food at its desired temperature.

A better solution has been proposed in U.S. Patent no. 4816646 : It concerns a receptacle in the form of a bag formed of insulating material. Within this bag, an insert of a high density material, capable of retaining heat is located, and is heated by an electric resistance heater, connected to an electric power source. Prior to use, the insert mass is heated to a high temperature. When a pizza has to be delivered, a hot pizza, in a box , is placed within the cavity of the receptacle and the resistance heater is disconnected from the power source. During the transportation, the pizza will stay warm, due to the heat retention of the insert mass. A drawback of this receptacle is that it is very heavy, due to the weight of the high density material, and therefore rather impractical in use.

In U.S. Patent no. 4933534, it has been proposed to place a heating element, having the form of a flat sheet, on the bottom of a cardboard pizza box, said heating element being arranged to be connectable to a car cigarette lighter socket, for the delivery of electrical power, during the transportation.

All the above mentioned prior art devices provide more or less a solution to the above mentioned problem.

However, a major problem, which is not solved by any of these devices lies in the fact that, during transportation, vapour condenses against the walls of the container, and that this condensed moisture falls down on the pizza or quiche, thereby making the crust soggy and moisture laden.

In U.S. patent no. 4237171, an insulated and moisture absorbent food container has been proposed. This container essentially has an inner layer of absorbent paperboard, adhered to an outer layer of resinous foam insulating material.

However, the quantity of moisture absorbed by the paperboard has proved not to be sufficient to prevent droplets of condensed moisture from falling down on the food in the container.

Moreover, the thickness of the paperboard layer is limited, due to the fact that it must be possible to bent it into the form of a container. (column 2, lines 51-54 of U.S. Patent no. 4237171).

This also limits the quantity of moisture which can be absorbed by the paperboard layer.

Another drawback of this container lies in the fact that the paperboard releases an unpleasant smell, when it is warm and damp.

The same drawbacks also apply to the pizza pie warming carrier, disclosed in U.S. Patent No. 3 721 803. This container, being sized to fit about a pizza in a paperboard box, has a condensing surface (Silver foil) and a heating source, connectable to a cigarette lighter of an automobile. The condensing suface causes a decrease in the temperature of the adjacent wall of the paperboard pizza box. This causes the moisture to be condensed, when making contact with this colder wall, and to be absorbed by the paperboard.

The quantity of moisture, which can be absorbed (also in view of the limited thickness of the paperboard walls of a pizza box) is not sufficient to solve the problem, in a satisfactory way. A further drawback lies in the unpleasant smell of warm and damp paperboard.

It is an object of the present invention to provide an improved heating box for the transportation of pizzas or quiches, which is capable of maintaining a pizza or quiche at an elevated high temperature, and which efficiently overcomes the above mentioned problem of the condensing moisture.

According to this invention, this object is achieved by a heating box for the transportation of pizzas or quiches, comprising a box, formed of a thermal insulating material, which is sized to contain at least one pizza or quiche, and means for absorbing condensed moisture into this box, characterised in that the means for absorbing condensed moisture are substantially formed of cellulose fibre material.

Cellulose fibres have a very high absorptive power. They can absorb a quantity of liquid, which corresponds up to 13 times their own weight.

Moreover, cellulose fibres do not decay, when they come in contact with liquids, they do not give off fluff, they can be used (and reused) in the food sector, and they offer a very good mechanical resistance.

A heating box, according to this invention, wherein a heating resistance is placed, is capable of maintaining a pizza or quiche at an elevated high temperature, during long periods of time, when this resistance is connected to an electric power source, such as a cigarette lighter socket of an automobile.

The cellulose filbre material, advantageously has the form of a flexible layer, which is placed adjacent to the top wall into the box.

Consequently, this layer is situated above the pizza or quiche, when placed in the box. The evaporating moisture rises upwardly, and immediately reaches the absorption means. When this moisture condenses, it is immediately absorbed in the flexible layer of cellulose fibre material.

When this flexible layer of absorption material covers the total (is coextensive with the) internal area of the top wall, it extends above the total surface of the pizza or quiche. This has the advantage that all of the evaporating moisture certainly reaches the absorption means.

In a perferred embodiment, according to this invention, the heating box comprises a bottom part and a seperate lid, which has a downwardly extending circumferential edge, whereas the absorption means are sandwiched between the internal top surface of the lid and a spiraled thead, which is secured against the inside of said circumferential edge.

Advantageously, a heat conducting plate, with a flat electric resistance, adhered onto its bottom side, is placed in the bottom part of the heating box.

This plate serves as a support for the electric resistance, and is at the same time, a heat-conducting element.

A very effective heating box is achieved when the thermal insulating material is a foam of physically reticulated polyolefines.

This material has very good heat insulting properties.

Excellent heat insulating properties of the heating box are achieved when the bottom part and the lid are provided with a fabric coating over their outer surface.

When the heating box has an essentially circular shape, which corresponds to the shape of pizzas of quiches, as they are generally available, the empty space in a box, containing such a pizza or quiche, is reduced to a minimum.

Such a heating box, achieves the advantage that the heat loss from the pizza or quiche towards the surrounding air is minimized.

Futher fiatures of this invention will become apparent from the following description of a preferred embodiment, with reference to the appended drawings where:

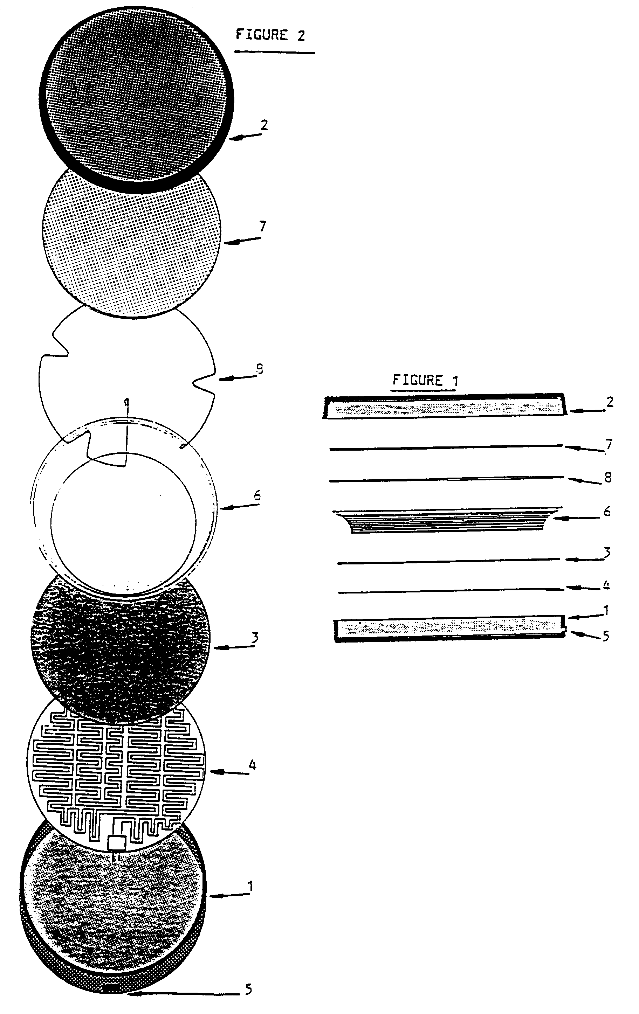

Figure 1 is a cross-sectional exploded view of a heating box, according to this invention.
Figure 2 is a perspective exploded view of a heating box, according to this invention.

A perferred embodiment of a heating box, according to this invention, consists of two separate parts of circular shape : a bottom part (1), with an upwardly extending circumferential edge, and a lid (2) with a downwardly extending circumferential edge. Both parts (1,2) are formed of a foam of physically reticulated polyolefines with closed cells. Preferably a polypropylene copolymer.

The preferred technical characteristics of this material are the following :
- degree : 29
- density : between 30 kg/m^{3 and 40 kg/m}3, preferably 35 kg/m³.

The bottom part (1) and the lid (2) are provided with a fabric coating over the outer surface. This fabric has the following preferred characteristics :
- 82% polyester with dye guarantee
- 18% polyamide with dye guarantee
- density : between 220g/m² and 225g/m²
- width : 155 cm to 160 cm
- couloring guaranteed at the temperatures, necessary for thermal forming.

Onto the bottom side of a semi-hard aluminium disc (3) (with a preferred thickness of 0,5 mm) a flat flexible electric resistance (4) has been adhered. This resistence is preferably a low-voltage resistance with the following characteristics : 12V, 80W. This disc (3) with resistance (4) is placed in the bottom part (1) of the box.

The positive and negative poles of this resistance (4) are connected to an electric connector (5), which is fixed into the constituent material of the bottom part (1). This connector (5) can be reached from the outside of the box, through the wall of the bottom part (1) in order to be connected to an electric power source, such as a cigarette lighter socket of an automobile.

A pizza or quiche (not represented on the figures) will be placed on the disc (3), in a semi-hard aluminium service tray (6) (with a preferred thickness of 12 mm), having an upwardly extending rounded edge, making it easier to hold this tray, and to remove it from the heating box.

The lid (2) is provided with a flexible disc (7), entirely (for 100%) formed of agglomerated cellulose fibre material (without any additive, such as chlorine) for absorption of condensing moisture in the box. This disc (7) is fixed adjacent to the internal top surface of the lid (2), and is coextensive with the area of this surface.

In order to fix this cellulose fibre disc (7) against the internal top surface of the lid (2), an uneven, spiraled thread (8) having one coil, which is made of a synthetic material or stainless thread (preferably with a diameter of 2 mm) is secured against the inside of the downwardly extending edge of the lid (2), such that the disc (7) is sandwiched between the lid (2) and the spiraled thread (8).

## Claims

1. A heating box for the transportation of pizzas of quiches, comprising a box (1, 2), formed of a thermal insulating material, which is sized to contain at least one pizza or quiche, and means (7) for absorbing condensed moisture into this box, characterized in that the absorption means (7) are substantially formed of cellulose fibre material.

2. A heating box, as claimed in claim 1, characterized in that an electrical heating resistance (4) is placed in the box.

3. A heating box, as claimed in claim 1 or 2 characterized in that the absorption means (7) is a flexible layer (7), which is placed adjacent to the top wall into the heating box (1, 2).

4. A heating box, as claimed in claim 3, characterized in that the layer (7) is coextensive with the internal area of the top wall of the box.

5. A heating box, as claimed in any of the preceeding claims, characterized in that the box comprises a bottom part (1) and a separate lid (2), which has a downwardly extending circumferential edge, and that the absorption means (7) is sandwiched between the internal top surface of the lid (2) and a spiraled thread (8), which is secured against the inside of said circumferential edge.

6. A heating box as claimed in any of the claims 2 to 5 characterized in that a plate (3) formed of a heat conducting material is placed in the bottom part (1) of the heating box (1, 2), and that a flat electric resistance (4) is adhered on the bottom side of said plate (3).

7. A heating box as claimed in any of the preceeding claims, characterized in that the thermal insulating material is a foam of physically reticulated polyolefines.

8. A heating box as claimed in any of the preceeding claims, characterized in that the bottom part (1) and the lid (2) are provided with a fabric coating over their outer surfaces.

9. A heating box as claimed in any of the claims 6 of 8 characterised in that a tray (6) for carrying a pizza or quiche is placed on the heat conducting plate (3).

10. A heating box as claimed in any of the preceeding claims characterized in that the box (1, 2) has an essentially circular shape.
